# EUROPEAN PATENT APPLICATION

(11) **EP 4 830 858 A1**
(43) Date of publication of application: **28.10.2026**
(21) Application number: 26162269.0
(22) Date of filing: 04.03.2026
(51) Int. Cl.: B23K 9/02, B23K 9/095

(54) **SYSTEMS AND METHODS TO TEACH WELDING PROGRAMS ON A ROBOTIC WELDING SYSTEM**

(30) Priority: 07.03.2025 US 202563768668 P; 27.02.2026 US 202619552640
(71) Applicant: Illinois Tool Works Inc., Glenview IL 60025 (US)
(72) Inventor: OVERESCH, Jeremy, Glenview, 60025 (US); NOLAND, Samantha, Glenview, 60025 (US); SHAMONSKY, Dorothy, Glenview, 60025 (US); KANNEMEYER, Michael, Glenview, 60025 (US)
(74) Representative: HGF

(57) **Abstract**

Disclosed example robotic welding systems include: a robotic manipulator configured to position a welding torch; a welding power supply configured to output welding power to the welding torch; a user interface configured to receive inputs defining a robotic welding program having a maintenance activity and at least one weld involving a weld starting command and a weld ending command, the inputs including position information for at least one of the robotic manipulator or the welding torch for the at least one weld; and control circuitry configured to: prevent or permit programming or execution of at least one of the maintenance activity or a multi-pass weld involving the at least one weld based on whether the maintenance activity or the at least one weld includes a first non-welding movement command before the maintenance activity or the weld starting command of the at least one weld.

## Description

### RELATED APPLICATIONS

The present application claims the benefit of U.S. Patent Application Serial No. 63/768,668, filed March 7, 2025, entitled "SYSTEMS AND METHODS TO TEACH WELDING PROGRAMS ON A ROBOTIC WELDING SYSTEM." The entirety of U.S. Patent Application Serial No. 63/768,668 is expressly incorporated herein by reference.

### FIELD OF THE DISCLOSURE

This disclosure relates generally to robotic welding and, more particularly, to systems and methods to teach welding programs on a robotic welding system.

### BACKGROUND

Robotic welding is often used to perform repetitive welding operations involving workpieces having a consistent configuration and series of welds to be performed. Collaborative robots are a type of robot which include features enabling use within a closer proximity to personnel than conventional robots.

### SUMMARY

Systems and methods to teach welding programs on a robotic welding system are disclosed, substantially as illustrated by and described in connection with at least one of the figures, as set forth more completely in the claims.

### BRIEF DESCRIPTION OF THE DRAWINGS

FIG. 1 illustrates an example robotic welding system to perform welding, including a welding-type power supply and a robot control system, in accordance with aspects of this disclosure.
FIG. 2 is a block diagram of an example implementation of the welding-type power supply and the robot control system of FIG. 1.
FIG. 3 is a block diagram of another example implementation of the welding-type power supply and the robot control system of FIG. 1.
FIGS. 4A-4E illustrate example user interfaces that may be provided by the robot control system of FIGS. 1-3 to teach welding programs including multi-pass procedures.
FIGS. 5A-5B illustrate example user interfaces that may be provided by the robot control system of FIGS. 1-3 to teach welding programs including maintenance activities.
FIG. 6 is a flowchart representative of example machine readable instructions which may be executed by the example robot control system of FIGS. 1, 2, and/or 3 to control a robotic welding system including enforcing non-welding movements prior to and after a weld iteration and/or a maintenance activity.
FIG. 7 is a flowchart representative of example machine readable instructions which may be executed by the example robot control system of FIGS. 1, 2, and/or 3 to control a robotic welding system including enforcing non-welding movements prior to and after a maintenance activity.

The figures are not necessarily to scale. Where appropriate, similar or identical reference numbers are used to refer to similar or identical components.

### DETAILED DESCRIPTION

For the purpose of promoting an understanding of the principles of this disclosure, reference will be now made to the examples illustrated in the drawings and specific language will be used to describe the same. It will nevertheless be understood that no limitation of the scope of the claims is intended by this disclosure. Modifications in the illustrated examples and such further applications of the principles of this disclosure as illustrated therein are contemplated as would typically occur to one skilled in the art to which this disclosure relates.

Multi-pass welding refers to welding procedures using multiple welding beads to build up to a desired weld thickness. Multi-pass welding is often used on thicker workpieces. To program a robot to perform welding in multiple passes, the user must teach the robot where a multi-pass procedure will start and end, the number of passes, and the respective offsets and weld settings for each pass.

Robotic welding configurations may also involve maintenance activities, such as cutting of the welding wire to a desired stickout length and/or reaming the welding torch for cleaning. Maintenance activities may have preprogrammed locations to allow users teaching the robots to invoke the maintenance activity at desired times during the robotic welding program. In this manner, invoking the maintenance activity does not require the user to move the robot or torch to the preprogrammed location of the maintenance activity.

Because welding robots, including collaborative robots, are based on taught locations and orientations, robotic welding systems are unable to identify obstructions that may be present in a given welding pass that may not have been present during teaching of the multi-pass procedure and/or programming of maintenance activity commands. Accordingly, conventional robotic welding systems require specific location programming and/or logic by the programmer to avoid collisions and/or damage. Such programming is costly and requires additional time investments by the programmer for each robotic welding program.

Disclosed example systems and methods reduce the time involved in programming multi-pass weld procedures and/or invoking maintenance activities in robotic welding systems, such as by allowing the weld programmer to easily define a multi-pass weld procedure using a defined weld seam and/or invoking a maintenance activity. In disclosed examples, the robotic welding system reduces the risks of collision and/or damage when using the easier multi-pass weld procedure definition method by enforcing conditions or requirements on multi-pass weld procedures and/or maintenance activities in weld programs. In some examples, a welding program is required to include a non-welding movement command prior to a maintenance activity command or prior to a weld of a multi-pass weld procedure and/or a non-welding movement command following a maintenance activity command or following a weld of a multi-pass weld procedure. Accordingly, disclosed example systems and methods reduce the likelihood that a robotic manipulator and welding torch collide with the weldment or other obstruction prior to or after each welding pass of the multi-pass procedure.

In some disclosed examples, a robotic control system provides a user interface to define the welding program. The user interface may output a checklist containing conditions that must be passed to permit creation and/or execution of a weld program. Because the user may be able to change the commands of the weld sequence after a multi-pass procedure is created or defined, disclosed example robotic control systems further verify that the multi-pass procedure continues to satisfy the conditions following changes to the weld program.

As used herein, welding-type power refers to power suitable for performing welding, cladding, plasma cutting, induction heating, laser (including laser welding and laser cladding), carbon arc cutting or gouging and/or welding wire preheating. As used herein, a welding-type power supply refers to any device capable of, when power is applied thereto, supplying welding, cladding, plasma cutting, induction heating, laser (including laser welding and laser cladding), carbon arc cutting or gouging and/or resistive wire preheating, including but not limited to transformer-rectifiers, inverters, converters, resonant power supplies, quasi-resonant power supplies, switch-mode power supplies, etc., as well as control circuitry and other ancillary circuitry associated therewith.

While examples systems and methods are disclosed herein with reference to robotic welding, this disclosure is not limited to welding systems. Disclosed systems and methods may be modified or adapted to a robotic system, including collaborative robotic systems, for performing any type of welding-type processes, such as welding, cladding, plasma cutting, induction heating, laser (including laser welding and laser cladding), carbon arc cutting or gouging and/or welding wire preheating.

According to aspects of this disclosure, example robotic welding systems include: a robotic manipulator configured to position a welding torch; a welding power supply configured to output welding power to the welding torch; an user interface configured to receive inputs defining a robotic welding program having a maintenance activity and at least one weld involving a weld starting command and a weld ending command, the inputs including position information for at least one of the robotic manipulator or the welding torch for the at least one weld; and control circuitry configured to: prevent programming or execution of at least one of the maintenance activity or a multi-pass weld involving the at least one weld while the maintenance activity or the at least one weld does not include a first non-welding movement command before the maintenance activity or the weld starting command of the at least one weld or does not include a second non-welding movement command following the maintenance activity or the weld ending command of the at least one weld; permit programming or execution of the multi-pass weld involving the maintenance activity or the at least one weld when the maintenance activity or the at least one weld includes the first non-welding movement command and the second non-welding movement command; and control the robotic manipulator and the welding power supply based on the maintenance activity or the multi-pass weld.

In some example robotic welding systems, the control circuitry is configured to identify the multi-pass weld of the robotic welding program comprising two or more iterations of the at least one weld. In some example robotic welding systems, the control circuitry is configured to identify the multi-pass weld of the robotic welding program based on an input via the user interface. In some example robotic welding systems, the multi-pass weld is defined by indicating the weld starting command, the weld ending command, and a number of passes via the user interface. In some example robotic welding systems, the control circuitry is configured to determine whether the multi-pass weld includes both of the first non-welding movement prior to the weld starting command and the second non-welding movement following the weld ending command.

In some example robotic welding systems, the two or more iterations are defined by a same starting location and a same ending location along the weld seam. In some example robotic welding systems, the control circuitry is configured to modify at least one of the starting location or the ending location for at least one of the two or more iterations. In some example robotic welding systems, the control circuitry is configured to modify the at least one of the starting location or the ending location for the at least one of the two or more welding passes in a direction perpendicular to the direction of the weld seam being welded via the two or more iterations.

In some example robotic welding systems, the control circuitry is configured to determine whether the first non-welding movement command is present or the second non-welding movement command is present in response to a command to generate the robotic welding program involving the multi-pass weld involving the one or more welds. In some example robotic welding systems, the operator interface is configured to receive an input to modify the two or more iterations of the at least one weld, and the control circuitry is configured to determine whether the first non-welding movement command or the second non-welding movement command is present in response to modification of the two or more iterations of the at least one weld.

In some example robotic welding systems, the operator interface is configured to prevent a user command to generate the robotic welding program involving the multi-pass weld involving the one or more welds while the first non-welding movement command or the second non-welding movement command is not present. In some example robotic welding systems, the control circuitry is configured to determine whether the two or more welding passes include the weld starting command and the weld ending command. In some example robotic welding systems, the maintenance activity includes at least one of a delay for a defined time period, a delay for an operator input, a welding wire cutting procedure, or a nozzle reaming procedure.

According to aspects of this disclosure, example robotic welding interfaces include: a user interface configured to receive inputs defining a robotic welding program having a maintenance activity and at least one weld involving a weld starting command and a weld ending command, the inputs including position information for at least one of the robotic manipulator or the welding torch for the at least one weld; and control circuitry configured to: prevent programming or execution of at least one of the maintenance activity or a multi-pass weld involving the at least one weld while the maintenance activity or the at least one weld does not include a first non-welding movement command before the maintenance activity or the weld starting command of the at least one weld or does not include a second non-welding movement command following the maintenance activity or the weld ending command of the at least one weld; and permit programming or execution of the multi-pass weld involving the maintenance activity or the at least one weld when the maintenance activity or the at least one weld includes the first non-welding movement command and the second non-welding movement command.

In some example robotic welding interfaces, the control circuitry is configured to identify the multi-pass weld of the robotic welding program comprising two or more iterations of the at least one weld. In some example robotic welding interfaces, the control circuitry is configured to identify the multi-pass weld of the robotic welding program based on an input via the user interface. In some example robotic welding interfaces, the multi-pass weld is defined by indicating the weld starting command, the weld ending command, and a number of passes via the user interface.

In some example robotic welding interfaces, the maintenance activity includes at least one of a delay for a defined time period, a delay for an operator input, a welding wire cutting procedure, or a nozzle reaming procedure. In some example robotic welding interfaces, the control circuitry is configured to modify at least one of the starting location or the ending location for at least one of the two or more iterations. In some example robotic welding interfaces, the control circuitry is configured to modify the at least one of the starting location or the ending location for the at least one of the two or more welding passes in a direction perpendicular to the direction of the weld seam being welded via the two or more iterations.

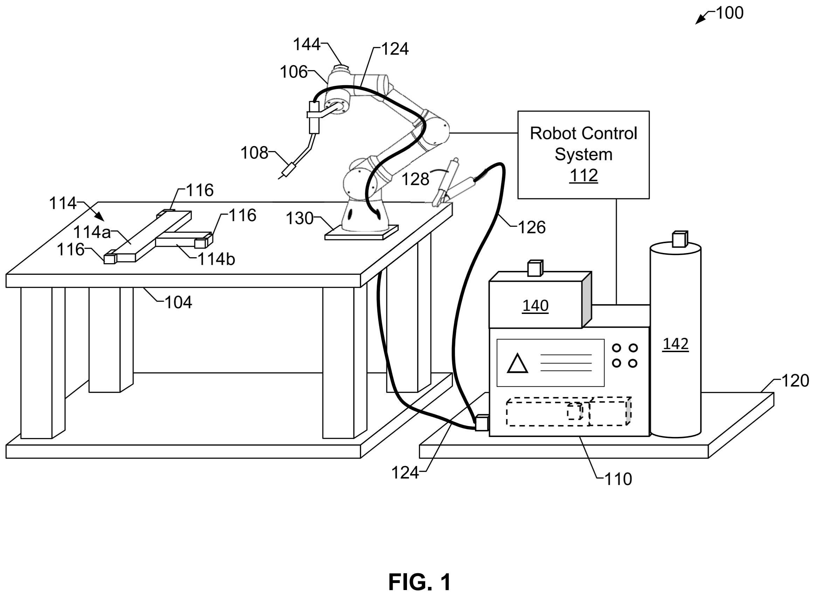

FIG. 1 illustrates an example robotic welding system 100 to perform welding. The example robotic welding system 100 of FIG. 1 includes a welding table 104, a robotic manipulator 106 configured to manipulate a welding torch 108, a welding-type power supply 110, and a robot control system 112.

The welding table 104, robotic manipulator 106, the welding torch 108, the welding-type power supply 110, and/or the robot control system 112, and/or subgroups of these components, may be packaged together (e.g., pre-assembled, pre-calibrated) to provide rapid setup of the robotic welding system 100 for welding at the end-user location. The robotic welding system 100 may be used to make repetitive welds, to leverage the consistency and repeatability advantages of the robotic manipulator 106. In the example of FIG. 1, the robotic manipulator 106 and/or the robot control system 112 are configured as a collaborative robot, which provides features that make the robotic manipulator 106 more conducive to working in areas in which people are proximate the robotic welding system 100.

In the example of FIG. 1, a workpiece 114 is positioned on the welding table 104. The workpiece 114 may include multiple components 114a, 114b which are to be welded together at one or more joints. To provide consistency in arrangement of the workpiece components 114a, 114b, the robotic welding system 100 may further include fixtures 116 attached to the welding table 104. The fixtures 116 may guide the placement of the components 114a, 114b, which can be used to consistently place the multiple components 114a, 114b.

During a welding operation or welding procedure, the robotic welding system 100 manipulates the welding torch 108, such as the illustrated welding torch, to which power is delivered by the welding-type power supply 110 via a first conductor 124 and returned by way of a work cable 126 and a work clamp 128 coupled to the weld table 104. The welding equipment may further include, for example, a source of shielding gas 142, a wire feeder 140, and other accessories and/or equipment. Other accessories and/or equipment may include, for example, water coolers, fume extraction devices, one or more controllers, sensors, user interfaces, and/or communication devices (wired and/or wireless).

The example robotic welding system 100 is configured to form a weld using any known electric welding techniques. Example electric welding techniques include shielded metal arc welding (SMAW), MIG, flux-cored arc welding (FCAW), TIG, laser welding, sub-arc welding (SAW), stud welding, friction stir welding, and resistance welding. In some examples, the welding-type power supply 110 and/or other welding equipment are configured to support one or more, but fewer than all, types of welding processes. To change welding processes, the welding-type power supply 110, torch 108, and/or other welding equipment may be removed (e.g., disconnected and moved away from the robotic welding system 100) and replaced by a different welding-type power supply, torch, and/or other welding equipment that supports the desired welding process. To facilitate ease of movement, the example welding equipment may be mounted or attached to a cart 120 or other conveyance (e.g., ground conveyance, hanging conveyance, etc.). Additionally or alternatively, multiple different types of welding equipment (e.g., multiple power supplies having different capabilities, multiple torches, etc.) may be co-located (e.g., proximate to a same robotic manipulator 106, on a rack of equipment, etc.) to enable rapid reconfiguration of the robotic welding system 100.

The example robotic manipulator 106 may operate using any number of degrees of freedom to manipulate the welding torch 108. For example, the robotic manipulator 106 may include multiple joints, in which each joint has one or more degrees of freedom, to achieve multiple orientations for accessing one or more weld joints on the workpiece 114. Whereas conventional welding robots are contained within a weld cell that is protected against intrusion by operators during robot operations (e.g., welding operations and/or other movement by the robot), in some examples the robotic welding system 100 is configured as a cobot, has a controller or processor, as well as one or more sensors, that are configured to operate in a manner such that humans do not necessarily need to be excluded from the area in which the robotic manipulator 106 is operating. For example, the robotic manipulator 106 may rapidly detect and respond to collisions, may operate with reduced speed and/or joint torque relative to conventional welding robots, and/or implement other features.

The robotic manipulator 106 is coupled to the table 104 via a base 130. Once secured, the base 130 is fixed with respect to the table 104, and may serve as a reference for position and/or orientation for the robotic manipulator 106.

The example robotic manipulator 106 and/or the example robot control system 112 are configured to transmit commands, requests, data, and/or other messages and/or communications to the power supply 110 via one or more protocols. The robotic manipulator 106 and/or the robot control system 112 are further configured to receive responses, acknowledgments, data, and/or other messages and/or communications from the power supply 110 via the one or more protocols. Based on a robotic welding procedure, the robotic manipulator 106 and/or the robot control system 112 may communicate parameters to the power supply 110 for configuration according to the robotic welding procedure, and/or adjust the welding-type process based on the variables and/or other data obtained from the power supply 110 while performing welding operations. In addition to communication with the power supply 110, the robotic manipulator 106, and/or the robot control system 112, the power supply 110, the robotic manipulator 106, and/or the robot control system 112 may communicate with other welding equipment (e.g., a welding accessory, such as the wire feeder 140, a shielding gas supply valve, a welding wire preheating system, a fume extraction system) and/or other robotic equipment.

The example robotic welding system 100 of FIG. 1 further includes a user input device 144. The user input device 144 is coupled (e.g., attached, mounted, integrated) to the robotic manipulator 106. For example, the user input device 144 may be coupled to the J5 or J6 joints of a through-arm type of robotic manipulator. The example user input device 144 is a six-axis joystick, also referred to as a space mouse, which has three degrees of linear input and three degrees of rotational input. In other examples, the user input device 144 may be implemented using an input device having at least two axes of input. For each axis of input, the user input device 144 permits the user to manipulate the user input device 144 in at least two directions (e.g., +/- translation for linear inputs, +/- tilting or rotation for rotational inputs).

During a teaching mode (e.g., programming positions and/or orientations of the robotic manipulator 106 and/or the welding torch 108 to generate a weld program while the welding-type power source is not outputting the welding-type power to the welding-type torch), inputs received via the user input device 144 may be used by the robot control system 112 to control motion of the robotic manipulator 106, such as for fine or low speed motions.

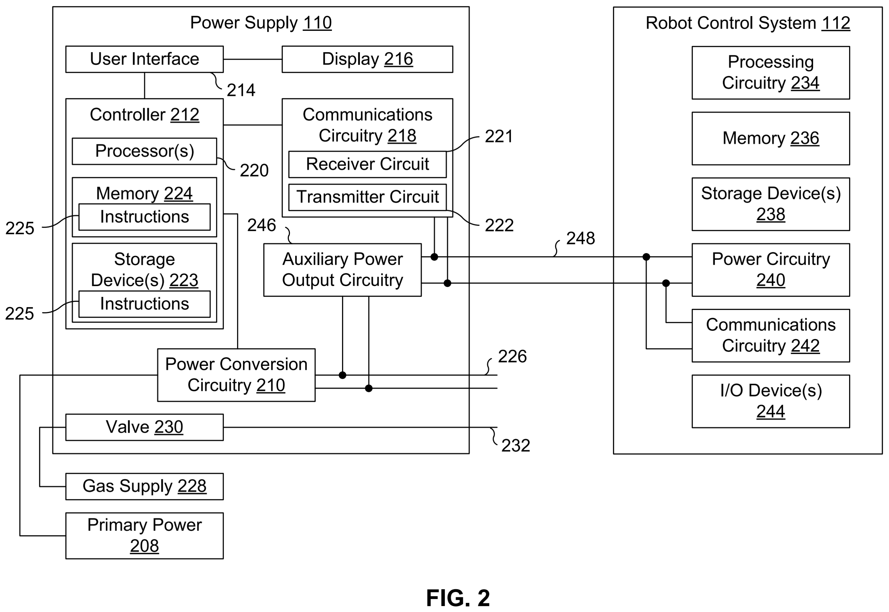

FIG. 2 is a block diagram of an example implementation of the welding-type power supply 110 and the robot control system 112 of FIG. 1. The example welding-type power supply 110 powers, controls, and supplies consumables to a welding application. In some examples, the welding-type power supply 110 directly supplies input power to the welding torch 108. In the illustrated example, the welding-type power supply 110 is configured to supply power to welding operations and/or preheating operations. The example welding-type power supply 110 may also provide power to a wire feeder to supply electrode wire to the welding torch 108 for various welding applications (e.g., GMAW welding, flux core arc welding (FCAW)).

The welding-type power supply 110 receives primary power 208 (e.g., from the AC power grid, an engine/generator set, a battery, or other energy generating or storage devices, or a combination thereof), conditions the primary power, and provides an output power to one or more welding devices and/or preheating devices in accordance with demands of the system. The primary power 208 may be supplied from an offsite location (e.g., the primary power may originate from the power grid). The welding-type power supply 110 includes a power conversion circuitry 210, which may include transformers, rectifiers, switches, and so forth, capable of converting the AC input power to AC and/or DC output power as dictated by the demands of the system (e.g., particular welding processes and regimes). The power conversion circuitry 210 converts input power (e.g., the primary power 208) to welding-type power based on a weld voltage setpoint and outputs the welding-type power via a weld circuit.

In some examples, the power conversion circuitry 210 is configured to convert the primary power 208 to both welding-type power and auxiliary power outputs. However, in other examples, the power conversion circuitry 210 is adapted to convert primary power only to a weld power output, and a separate auxiliary converter is provided to convert primary power to auxiliary power. In some other examples, the welding-type power supply 110 receives a converted auxiliary power output directly from a wall outlet. Any suitable power conversion system or mechanism may be employed by the welding-type power supply 110 to generate and supply both weld and auxiliary power.

The welding-type power supply 110 includes a controller 212 to control the operation of the welding-type power supply 110. The welding-type power supply 110 also includes a user interface 214. The controller 212 receives input from the user interface 214, through which a user may choose a process and/or input desired parameters (e.g., voltages, currents, particular pulsed or non-pulsed welding regimes, and so forth). The user interface 214 may receive inputs using any input device, such as via a keypad, keyboard, buttons, touch screen, voice activation system, wireless device, etc. Furthermore, the controller 212 controls operating parameters based on input by the user as well as based on other current operating parameters. Specifically, the user interface 214 may include a display 216 for presenting, showing, or indicating, information to an operator. The controller 212 may also include interface circuitry for communicating data to other devices in the system, such as the wire feeder, the robotic manipulator 106, and/or the robot control system 112. For example, in some situations, welding-type power supply 110 wirelessly communicates with other welding devices within the welding system. Further, in some situations, the welding-type power supply 110 communicates with other welding devices using a wired connection, such as by using a network interface controller (NIC) to communicate data via a network (e.g., ETHERNET, Modbus, Devicenet network data layers, with10baseT, 100baseT, fiber optic, RS-485 physical layers, etc.).

The controller 212 includes control circuitry such as a processor 220 or other logic circuitry, which controls the operations of the welding-type power supply 110. The controller 212 receives and processes multiple inputs associated with the performance and demands of the system. The processor 220 may include one or more microprocessors, such as one or more "general-purpose" microprocessors, one or more special-purpose microprocessors and/or ASIC, and/or any other type of processing device. For example, the processor 220 may include one or more digital signal processors (DSPs).

The example controller 212 includes one or more storage device(s) 223 and one or more memory device(s) 224. The storage device(s) 223 (e.g., nonvolatile storage) may include ROM, flash memory, a hard drive, and/or any other suitable optical, magnetic, and/or solid-state storage medium, and/or a combination thereof. The storage device 223 stores data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth.

The memory device 224 may include a volatile memory, such as random access memory (RAM), and/or a nonvolatile memory, such as read-only memory (ROM). The memory device 224 and/or the storage device(s) 223 may store a variety of information and may be used for various purposes. For example, the memory device 224 and/or the storage device(s) 223 may store processor executable instructions 225 (e.g., firmware or software) for the processor 220 to execute. In addition, one or more control regimes for various welding processes, along with associated settings and parameters, may be stored in the storage device 223 and/or memory device 224, along with code configured to provide a specific output (e.g., initiate wire feed, enable gas flow, capture welding current data, detect short circuit parameters, determine amount of spatter) during operation.

In some examples, the welding power flows from the power conversion circuitry 210 through a weld cable 226. The example weld cable 226 is attachable and detachable from weld studs at each of the welding-type power supply 110 (e.g., to enable ease of replacement of the weld cable 226 in case of wear or damage). Furthermore, in some examples, welding data is provided with the weld cable 226 such that welding power and weld data are provided and transmitted together over the weld cable 226.

In some examples, the welding-type power supply 110 includes or is implemented in a wire feeder.

The example communications circuitry 218 includes a receiver circuit 221 and a transmitter circuit 222. Generally, the receiver circuit 221 receives data transmitted by the robotic manipulator 106 and/or the robot control system 112, and the transmitter circuit 222 transmits data to the robotic manipulator 106 and/or the robot control system 112.

In some examples, a gas supply 228 provides shielding gases, such as argon, helium, carbon dioxide, and so forth, depending upon the welding application. The shielding gas flows to a valve 230, which controls the flow of gas, and if desired, may be selected to allow for modulating or regulating the amount of gas supplied to a welding application. The valve 230 may be opened, closed, or otherwise operated by the controller 212 to enable, inhibit, or control gas flow (e.g., shielding gas) through the valve 230. Shielding gas exits the valve 230 and flows through a gas line 232 (which in some implementations may be packaged with the welding power output) to the wire feeder which provides the shielding gas to the welding application. In some examples, the welding-type power supply 110 does not include the gas supply 228, the valve 230, and/or the gas line 232.

The example robot control system 112 of FIG. 2 includes processing circuitry 234, memory 236, one or more storage device(s) 238, power circuitry 240, communications circuitry 242, and one or more I/O device(s) 244. The processing circuitry 234, memory 236, and/or the storage device(s) 238 may be implemented in a similar manner as the processors 220, the memory 224, and the storage devices 223 of the power supply 110, including being implemented in a controller.

The example processing circuitry 234 execute instructions to configure and/or program a robotic welding procedure, and/or generates commands to execute a robotic welding procedure via the robotic manipulator 106. The processing circuitry 234 may include one or more microprocessors, such as one or more "general-purpose" microprocessors, one or more special-purpose microprocessors and/or ASICs, and/or any other type of processing device. For example, the processing circuitry 234 may include one or more digital signal processors (DSPs). The memory device 236 may include a volatile memory, such as random access memory (RAM), and/or a nonvolatile memory, such as read-only memory (ROM). The memory device 236 and/or the storage device(s) 238 may store a variety of information and may be used for various purposes. For example, the memory device 236 and/or the storage device(s) 238 may store processor executable instructions (e.g., firmware or software) for the processing circuitry 234 to execute. In addition, one or more control regimes for various robotic manipulators and/or robotic welding procedures, along with associated settings and parameters, may be stored in the storage device(s) 238 and/or memory device 236. The storage device(s) 238 (e.g., nonvolatile storage) may include ROM, flash memory, a hard drive, and/or any other suitable optical, magnetic, and/or solid-state storage medium, and/or a combination thereof. The storage device(s) 238 store data (e.g., data corresponding to a welding application), instructions (e.g., software or firmware to perform welding processes), and/or any other appropriate data.

The power circuitry 240 converts input power to power usable by the robot control system 112 (e.g., by the processing circuitry 234, the memory 236, the storage device(s) 238, communications circuitry 242, the I/O device(s) 244, and/or the robotic manipulator 106). In the example of FIG. 2, the robot control system 112 is plugged into welding-type power supply 110 to provide operational power to the robot control system 112 and/or the robotic manipulator 106. In the illustrated example, the power supply 110 includes auxiliary power output circuitry 246, which converts input power (e.g., output power from the power conversion circuitry 210, primary power 208) to auxiliary power, such as a standard AC output (e.g., 120VAC or 240VAC at 50Hz or 60Hz). In such examples, the robot control system 112 can be plugged into the power supply 110 instead of mains power, and receives the auxiliary power via an auxiliary power connection (e.g., auxiliary power conductors 248 such as an AC power cord).

The example communications circuitry 218 and the communications circuitry 242 of FIG. 2 are configured to communicate via the auxiliary power connection. In examples in which the auxiliary power conductors 248 are configured to transmit 120VAC power (or other high-voltage AC power), the communications circuitry 218 and the communications circuitry 242 may be configured to comply with the IEEE Standard 1901-2010 and/or any other power line communication standard or technique compatible with high-speed communication over the auxiliary power connection.

The I/O device(s) 244 may include operator or user interfaces and/or other data interfaces. Example I/O device(s) 244 may include a keyboard, a keypad, a mouse, a trackball, a pointing device, a microphone, an audio speaker, a display device, an optical media drive, a multi-touch touch screen, a gesture recognition interface, a magnetic media drive, and/or any other operator interface devices to enable an operator to view information about the robot control system 112, the robotic manipulator 106, a robotic welding procedure, the connected power supply 110 and/or any other connected welding equipment, and/or any other information. For example, the I/O device(s) 244 may include input and/or output device(s) to control movement of the robotic manipulator 106, such as a teach pendant (e.g., a computing device executing software allowing the user to configure robotic welding procedures, welding parameters, and/or any other aspects of the robotic welding system 100), the example user input device 144, and/or dedicated programming devices positioned on the robotic manipulator 106 for use while guiding the robotic manipulator 106 in free drive mode. In other examples, the communications circuitry 242 may also include a communication interface to communicate with and control the robotic manipulator 106.

The power supply 110 may be connected to the example robot control system 112 by plugging the robot control system 112 into the power supply 110 via the auxiliary power connection (e.g., a 120VAC outlet on the power supply). While the power supply 110 is outputting the auxiliary output power and after the robot control system 112 is powered on and initialized, the power supply 110 and the robot control system 112 may automatically pair by communicating via the auxiliary power connection. To perform the pairing, the power supply 110 detects, via the communications circuitry 218, that the robot control system is coupled to the auxiliary power connection. For example, the communications circuitry 218 (and/or the communications circuitry 242) outputs messages via the auxiliary power connection, which are received and/or acknowledged by the communications circuitry 242 (or the communications circuitry 218).

In some such examples, in response to detecting the robot control system 112 via the auxiliary power connection and receiving communications from the robot control system 112, the controller 212 configures the welding-type power supply 110. For example, upon establishing communication between the robot control system 112 and the power supply 110, the power supply 110 may transmit to the robot control system 112 information that can be used to configure the power supply 110. The robot control system 112 can then provide commands to the power supply 110 to configure the power supply 110 to perform the desired welding processes as part of a robotic welding procedure, initiate and/or stop output power to the welding torch 108, and/or otherwise control the power supply 110.

Example information that may be automatically transmitted to the robot control system 112 by the power supply 110 may include an: identifier of a paired welding-type power supply (e.g., a serial number, an assigned name, etc.), an identification of capabilities of a paired welding-type power supply (e.g., a listing of features and/or modifiable parameters, a model number, etc.), software instructions to facilitate control of the welding-type power supply 110 by the robot control system 112 (e.g., a software application or plug-in, software updates, software routines, an API, etc.), identification of a welding capability of the welding-type power supply (e.g., a listing of available welding processes), identification of an adjustable parameter of the welding-type power supply (e.g., parameters that are typically used by an operator, parameters that are modifiable by typically hidden from the operator, robotic welding-specific parameters, etc.) identification of a parameter limitation of the welding-type power supply (e.g., voltage limits, current limits, power limits, wire feed speed limits, frequency limits, etc.), a robotic welding procedure and/or welding-type parameters to perform the robotic welding procedure (e.g., a stored, predefined set of instructions to be implemented by the robot control system 112 to perform a robotic welding procedure), and/or any other information that may be transferred between the power supply 110 and the robot control system 112. Additionally or alternatively, the welding-type power supply 110 may transmit one or more available real-time process data streams, such as welding current measurements, output voltage measurements, wire feed speed measurements. The robot control system 112 may use real-time process data streams for other aspects of the robotic welding procedure, such as process control, seam tracking, and/or any other control.

Additionally or alternatively, the welding-type power supply 110 may transmit information about physical system needs, such as the need for physical isolation or other physical configuration to be performed by the operator, to the robot control system 112. Based on the physical configuration information, the robot control system 112 may display the physical information to an operator via a display or otherwise notify the operator of the physical requirements. Additionally or alternatively, the welding-type power supply 110 may transmit system status information about one or more components of the welding system, for display by the robot control system 112 or other action. Example welding equipment system status information may include internal temperature measurements, airflow measurements, coolant circulation information, error codes and/or other diagnostic information, and/or any other status information.

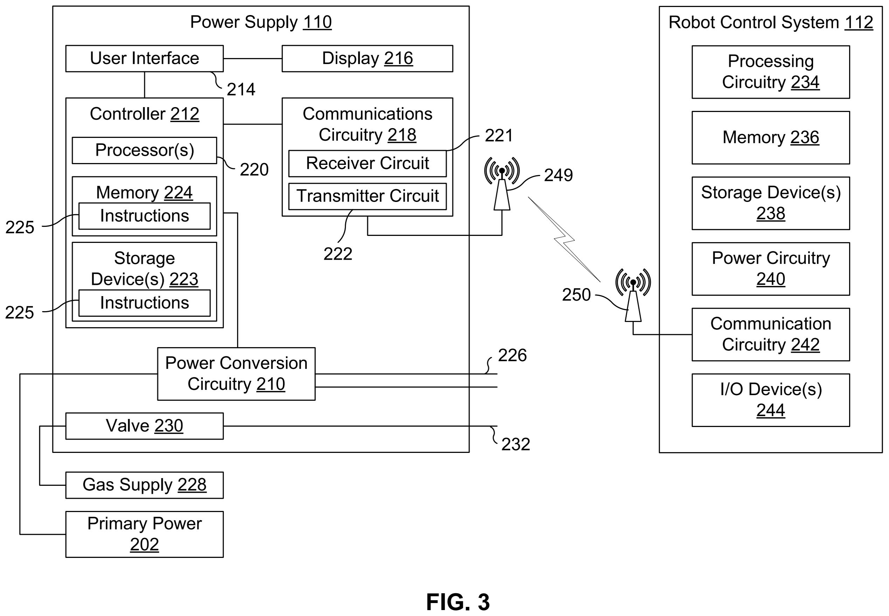

FIG. 3 is a block diagram of another example implementation of the welding-type power supply 110 and the robot control system 112 of FIG. 1. The example power supply 110 of FIG. 3 includes the components of the example power supply 110 of FIG. 2, but may include or omit the auxiliary power output circuitry 246. The example robot control system 112 of FIG. 3 includes the components of the robot control system 112 of FIG. 2.

In contrast with the power line communication of FIG. 2, the example welding-type power supply 110 and the robot control system 112 of FIG. 3 communicate via wireless communications. To this end, the example communications circuitry 218 and communications circuitry 242 are connected to respective antennas 249, 250.

While establishment of communications may occur automatically using power line communications as in FIG. 2, the example robot control system 112 and/or the power supply 110 may require initiation of pairing by the operator (e.g., via the user interface 214 and the I/O device(s) 244) to establish communication between the robot control system 112 and/or the power supply 110. For example, the operator may select a "Pair" button on each of the user interface 214 of the power supply 110 and a user interface of the robot control system 112, which then causes the communications circuitry 218 and the communications circuitry 242 to perform a pairing procedure. Upon establishing the communications channel via pairing, the power supply 110 and the robot control system 112 automatically exchange information and/or configure the power supply 110 as discussed above. In some examples, the operator may further be prompted to verify the pairing occurred between the desired welding-type power supply 110 and robot control system 112 (e.g., neither the power supply 110 nor the robot control system 112 paired with an unintended device nearby).

While example powerline and wireless communications are disclosed above, the example robot control system 112 and the power supply 110 may be coupled using any communications method, including conventional methods such as a control cable.

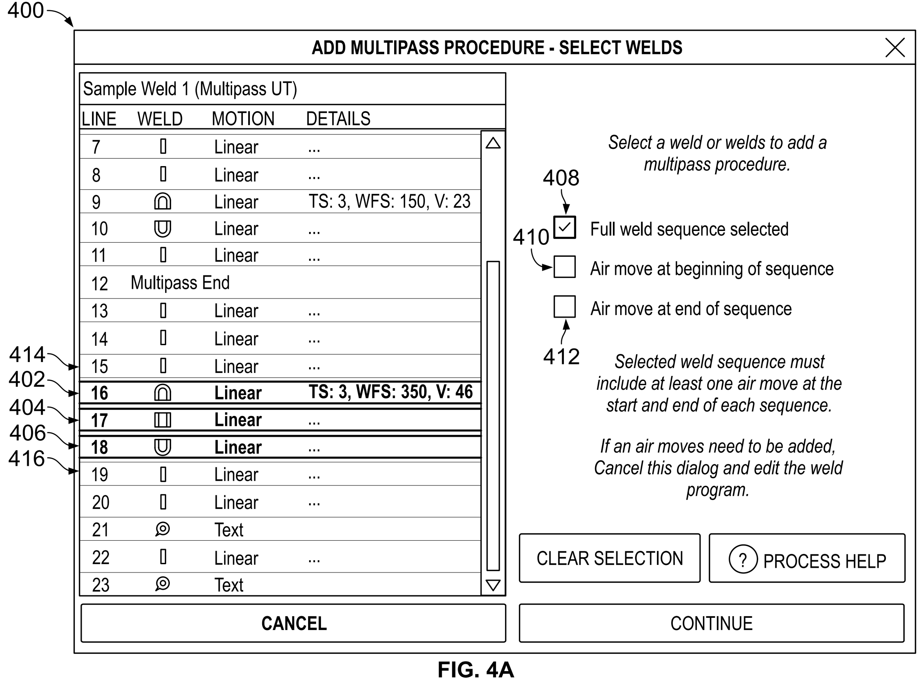

FIG. 4A illustrates an example user interface 400 that may be provided by the robot control system 112 of FIGS. 1-3 to teach welding programs including multi-pass procedures. The example interface 400 may implement the user interface 214 and/or the display 216 of the power supply 110, and/or the I/O device(s) 244 of the robot control system 112 of FIGS. 1-3, to receive inputs and provide outputs to a user for control of the robotic welding system 100. The example user interface 400 of FIG. 4A may be presented in response to a user selection of an multi-pass weld generation menu or subroutine.

As illustrated in FIG. 4A, the user interface 400 allows an operator to select a set of weld commands or steps (e.g., a weld starting command 402, a linear welding movement 404, and a weld ending command 406) to define a weld that is iterated two or more times to form a multi-pass weld procedure. The defined weld may correspond to a weld seam that is to be welded via a multi-pass weld procedure (e.g., root, fill, and/or cap weld passes). The multi-pass weld procedure may involve one weld or multiple distinct welds (e.g., each weld having a separate start and end). In disclosed examples, the robot control system 112 implements the multi-pass weld procedure by performing two or more iterations of the weld(s) defining the multi-pass weld procedure.

As described above, a poorly defined multi-pass weld procedure can result in collisions between the robotic manipulator 106 and/or the welding torch 108, and potential damage. The example robot control system 112 prevents programming and/or execution of a multi-pass weld unless the multi-pass weld procedure is defined to include predetermined requirements. The user interface 400 includes indicators 408, 410, 412 representing whether the requirements are satisfied for the selected weld(s) that define the multi-pass weld procedure.

In the example of FIG. 4A, the indicator 408 indicates whether the selected commands to define the multi-pass weld procedure include a full weld sequence, such as at least a weld starting command and a weld ending command. For example, if the selected commands do not include both a weld starting command and a weld ending command, with the weld starting command occurring prior to the weld ending command, the indicator 408 indicates that the condition is not satisfied. FIG. 4A illustrates a set of commands being selected which satisfy the condition of having a full weld sequence.

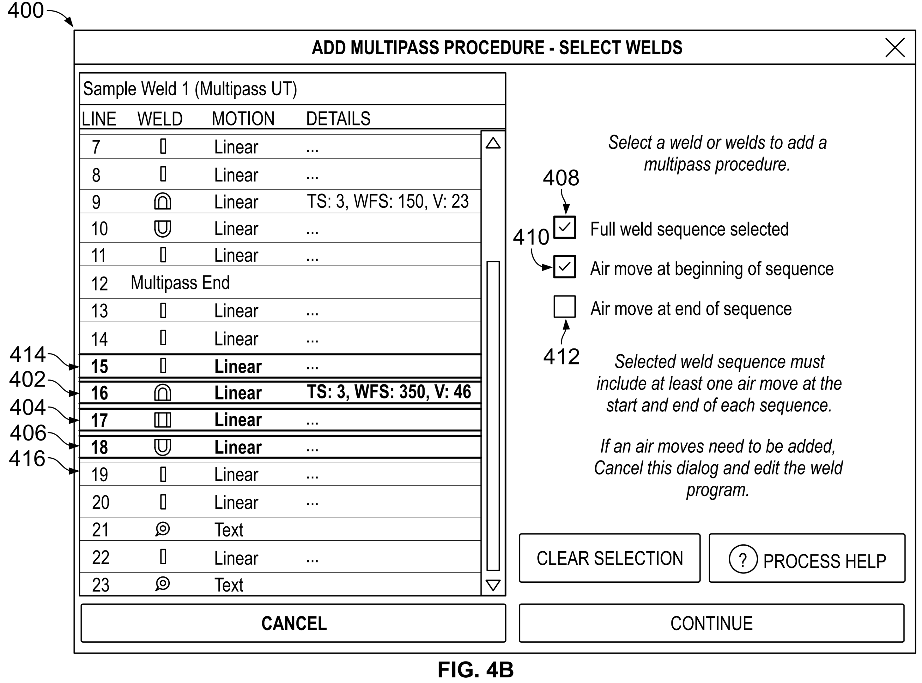

The indicator 410 indicates whether the selected commands to define the multi-pass weld procedure include a non-welding movement command before the weld starting command 402 of the at least one weld. The set of commands 402-406 selected in FIG. 4A do not satisfy the condition of having the non-welding movement command before the weld starting command 402. FIG. 4B illustrates the user interface 400 of FIG. 4A, in which the set of commands 402-406 is selected and a non-welding movement command 414 prior to the weld starting command 402 is also selected. Accordingly, the indicator 410 indicates that the condition that non-welding movement command 414 prior to the weld starting command 402 is satisfied in FIG. 4B.

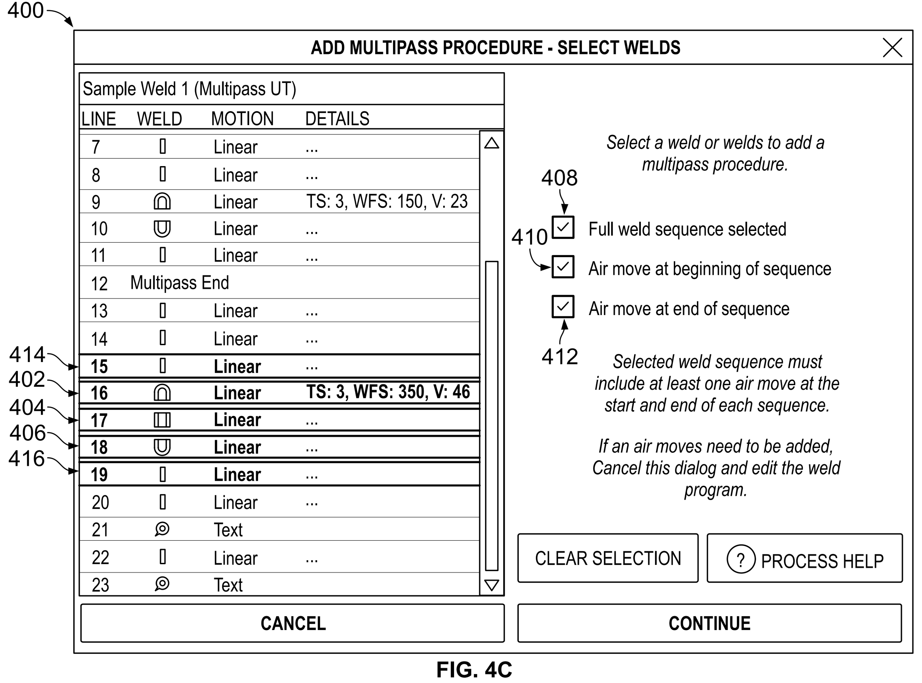

The indicator 412 indicates whether the selected commands to define the multi-pass weld procedure include a non-welding movement command following the weld ending command 406 of the at least one weld. The sets of commands 402-406 selected in FIG. 4A, and the set of commands 402-406, 414 selected in FIG. 4B, do not satisfy the condition of having the non-welding movement command following the weld ending command 406. Accordingly, the indicator 410 indicates that the condition is not satisfied in FIGS. 4A and 4B. FIG. 4C illustrates the user interface 400 of FIGS. 4A and 4B, in which the set of commands 402-406, 414 are selected, and a non-welding movement command 416 following the weld ending command 406 is also selected. Accordingly, the indicator 412 indicates that the condition that non-welding movement command 416 following the weld ending command 406 is satisfied in FIG. 4C.

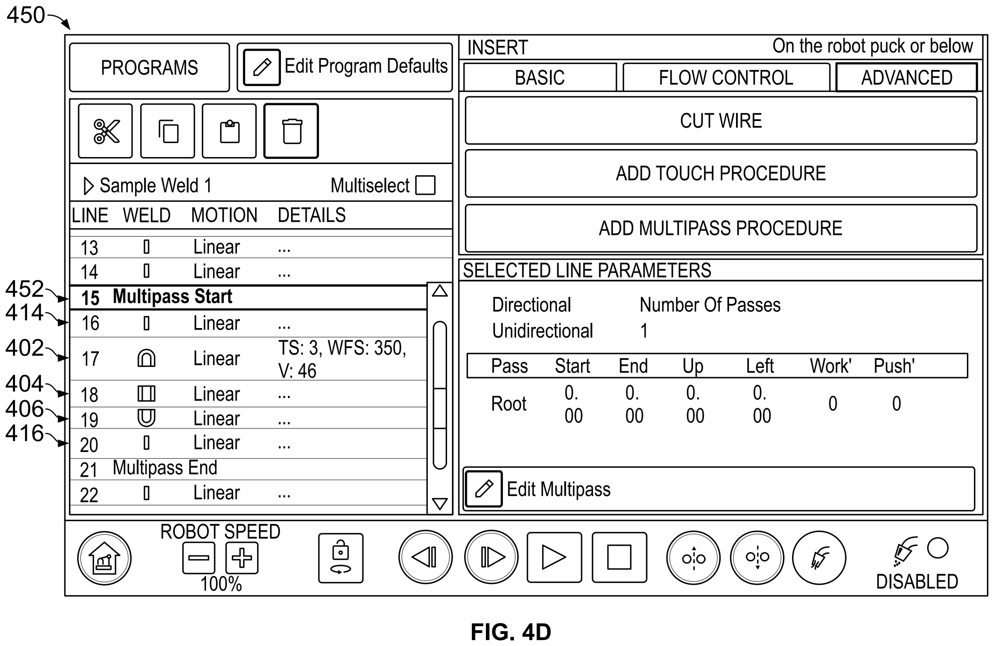

FIG. 4D illustrates another example user interface 450 that may be provided by the robot control system 112 of FIGS. 1-3 to teach welding programs including revising multi-pass procedures. The example user interface 450 may be output by the robot control system 112 following creation of a multi-pass weld procedure 452 via the user interface 400 of FIGS. 4A-4C. The example multi-pass weld procedure 452 includes the example commands 402-406, 414, 416. The user interface 450 permits changing of the commands in the welding program, such as by adding, removing, reordering, and/or modifying commands. As a result, it may be possible for the user to intentionally or inadvertently modify the commands in the defined multi-pass weld procedure 452.

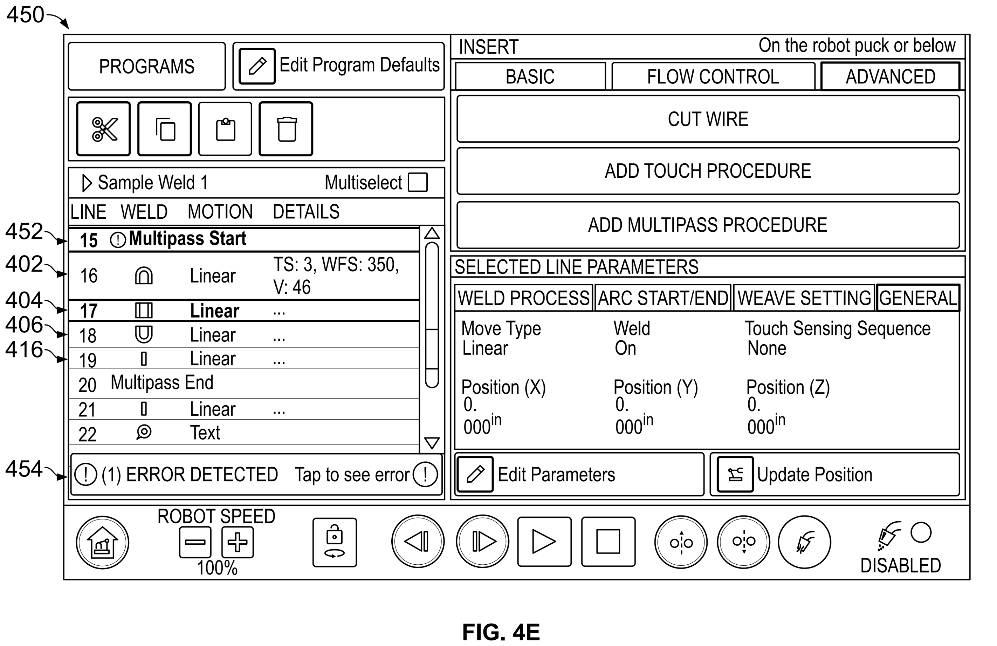

The example robot control system 112 monitors changes to the welding program and the commands to verify that the conditions represented by the indicators 408-412 remain satisfied while the welding program is being modified. FIG. 4E illustrates the example user interface 450 following a change that causes one of the conditions (e.g., requiring a non-welding movement prior to the weld starting command 402) to no longer be satisfied. As shown in FIG. 4E, the robot control system 112 responds to changes in the welding program that that causes one of the conditions to no longer be satisfied by outputting a notification, such as an error message 454, to user interface 450. The example robot control system 112 may prevent generation and/or execution of the welding program while the conditions are not satisfied (e.g., while the error message 454 is present). For example, the robot control system 112 may prevent a user command that adds the multi-pass weld procedure to the welding program, and/or prevent initiation of welding using the welding program. When the welding program is modified to satisfy the conditions for the multi-pass weld procedure, the robot control system 112 identifies the conditions as satisfied and removes the notification.

Additionally or alternatively, the robot control system 112 may apply conditions to maintenance activities. Example maintenance activities may include a delay for a defined time period, a delay for an operator input (e.g., any input, particular input(s) via I/O device(s)), a welding wire cutting procedure (e.g., moving the welding torch to a predetermined position and orientation for cutting the welding wire to a predetermined length), and a nozzle reaming procedure (e.g., moving the welding torch to a predetermined position and orientation for performing mechanical removal of spatter from the welding torch).

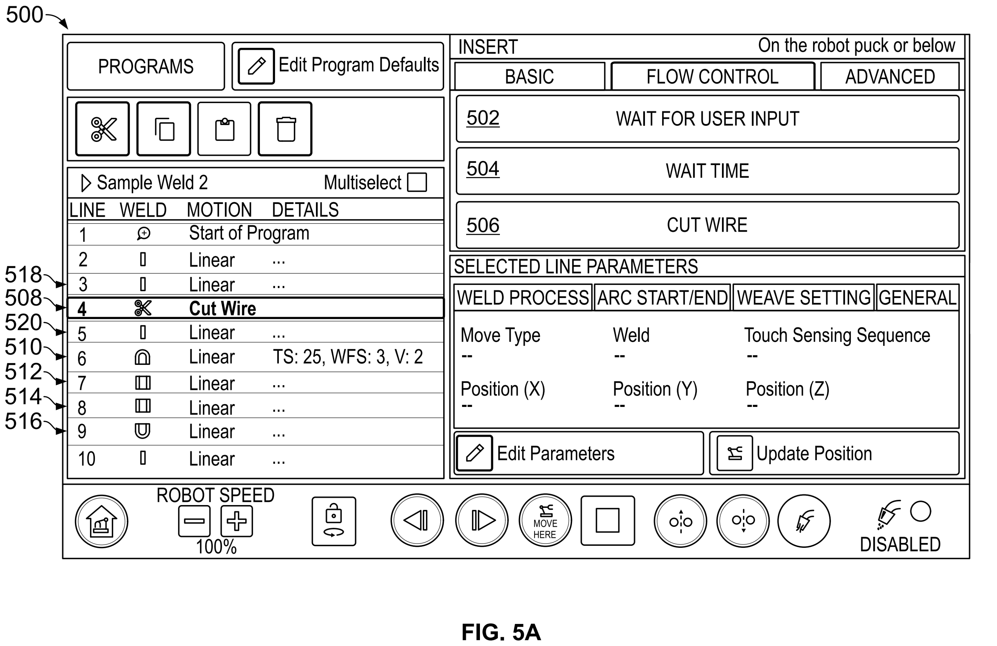

FIG. 5A illustrates another example user interface 500 that may be provided by the robot control system 112 of FIGS. 1-3 to teach welding programs including maintenance activities. The example user interface 500 is similar to the user interface 450, in that the user interface 500 permits modification of the weld program. In the examples, the user interface 500 permits the user to add, remove, reorder, and/or modify maintenance activities. To this end, the example user interface 500 includes buttons to add a command to await user input 502, a command to wait for a defined time period 504, and a command to perform a wire cut 506. However, other commands may be included in the user interface 500 and/or in alternative user interfaces (e.g., via a menu system).

For similar reasons as the multi-pass weld procedure, the example robot control system 112 may require one or more conditions to be present for maintenance activities to avoid collisions between the robotic manipulator 106 and/or the welding torch 108, and potential damage. The example robot control system 112 prevents programming and/or execution of a weld program unless the weld program including predetermined requirements associated with a maintenance activity.

The example weld program of FIG. 5A includes a wire cutting maintenance command 508 (e.g., added by selecting the wire cut command 506), as well as commands 510-516 that control the robotic welding system 100 to perform a weld. The example robot control system 112 requires that the welding program includes a non-welding movement command 518 prior to the wire cutting maintenance command 502 and/or a non-welding movement command 520 following the wire cutting maintenance command 502. In the example of FIG. 5A, the weld program satisfies the conditions of the robot control system 112. Accordingly, the robot control system 112 permits generation and/or execution of the maintenance activity command 508 in the weld program.

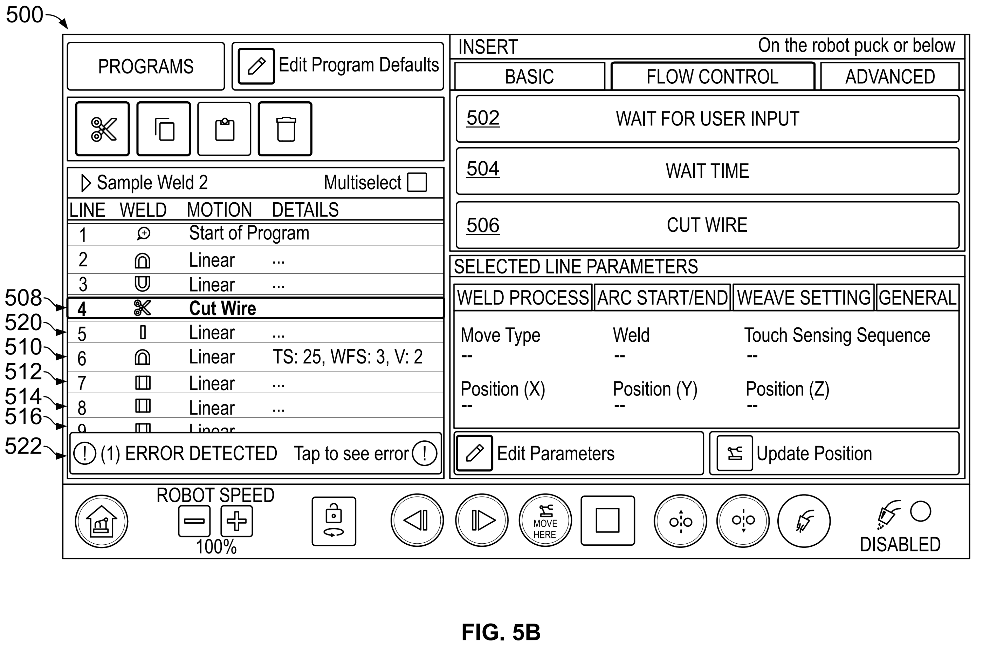

FIG. 5B illustrates the example user interface 500 of FIG. 5A in an example in which the non-welding movement command 518 is not present prior to the maintenance activity command 508 (e.g., has been removed or replaced). Similarly to the example user interface 450 of FIG. 4E, the robot control system 112 outputs a notification, such as an error message 522, to the user interface 500. The example robot control system 112 may prevent generation and/or execution of the welding program while the conditions are not satisfied (e.g., while the error message 522 is present). When the welding program is modified to satisfy the conditions for the maintenance activity, the robot control system 112 identifies the conditions as satisfied and removes the notification.

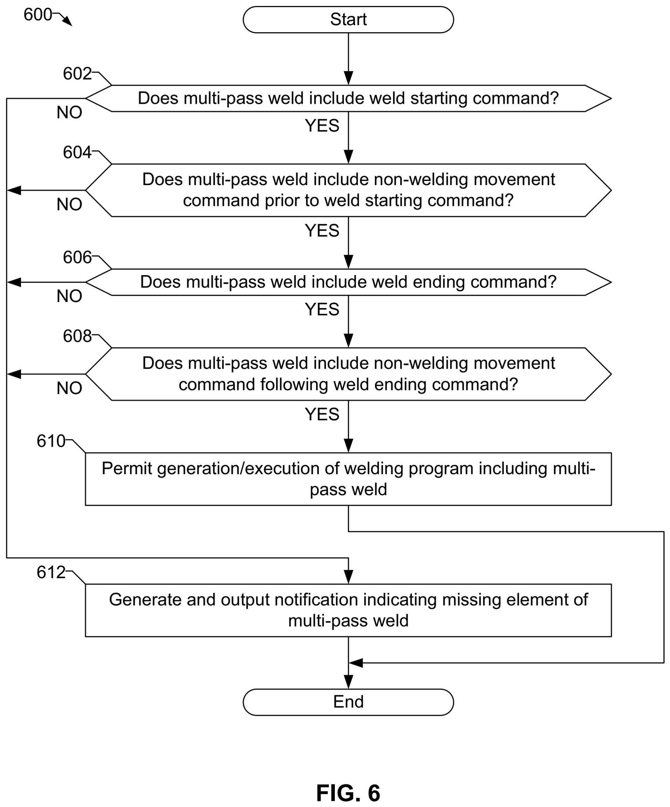

FIG. 6 is a flowchart representative of example machine readable instructions 600 which may be executed by the example robot control system 112 of FIGS. 1, 2, and/or 3 to control a robotic welding system 100 including enforcing non-welding movements prior to and after a weld iteration. The example instructions 600 may be performed by the processing circuitry 234 of FIGS. 2 and/or 3 to implement the user interfaces 400, 450 of FIGS. 4A-4E, and may be invoked in response to a command to add or define a multi-step weld procedure and/or in response to changes to weld programs including a multi-step weld procedure.

At block 602, the processing circuitry 234 determines whether a multi-pass procedure includes a weld starting command (e.g., the weld starting command 402 of FIG. 4A). If the multi-pass procedure includes the weld starting command 402 (block 602), at block 604 the processing circuitry 234 determines whether the multi-pass procedure includes a non-welding movement command prior to the weld starting command 402 (e.g., the non-welding movement command 414).

If the multi-pass procedure includes the non-welding movement command 414 prior to the weld starting command 402 (block 604), at block 606 the processing circuitry 234 determines whether the multi-pass procedure includes a weld ending command (e.g., the weld ending command 406 of FIG. 4A). If the multi-pass procedure includes the weld ending command 406 (block 606), at block 608 the processing circuitry 234 determines whether the multi-pass procedure includes a non-welding movement command after the weld ending command 406 (e.g., the non-welding movement command 416).

If the multi-pass procedure includes all of the weld starting command 402, the non-welding movement command 414 before the weld starting command 402, the weld ending command 406, and the non-welding movement command 416 after the weld ending command 406 (block 608), at block 610 the processing circuitry 234 permits generation and/or execution of the welding program including the multi-pass weld procedure. In some examples, the processing circuitry 234 permits the multi-pass weld procedure to be added to a weld program.

Conversely, if the multi-pass procedure is missing any of the weld starting command 402, the non-welding movement command 414 before the weld starting command 402, the weld ending command 406, or the non-welding movement command 416 after the weld ending command 406 (block 608), at block 612 the processing circuitry 234 generates and outputs a notification indicating that the multi-step weld procedure is missing one or more elements. In some examples, the processing circuitry 234 may output an indication of the element(s) that are missing from the multi-step weld procedure.

After outputting the notification (block 612) or after permitting generation and/or execution of the welding program (block 610), the example instructions 600 end.

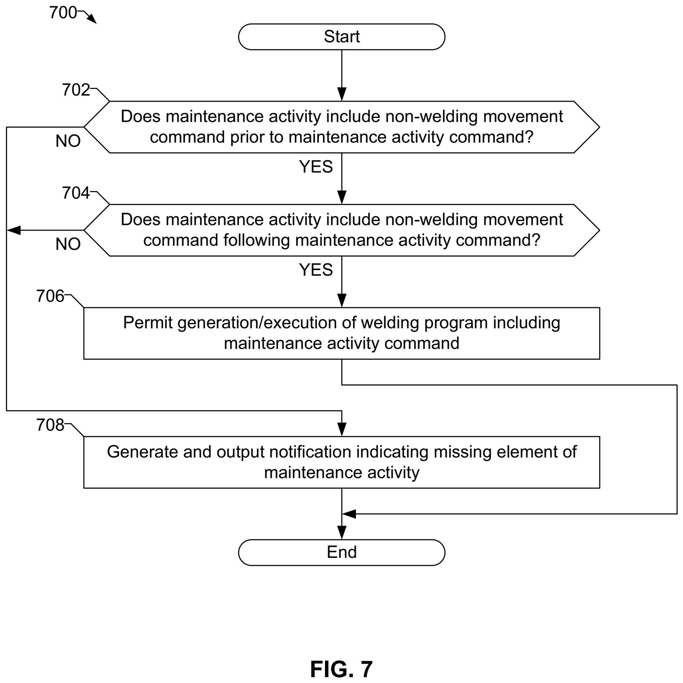

FIG. 7 is a flowchart representative of example machine readable instructions 700 which may be executed by the example robot control system 112 of FIGS. 1, 2, and/or 3 to control a robotic welding system 100 including enforcing non-welding movements prior to and after a maintenance activity. The example instructions 700 may be performed by the processing circuitry 234 of FIGS. 2 and/or 3, and may be invoked in response to one of multiple types of maintenance activity commands (e.g., the cut wire command 502 of FIGS. 5A and 5B).

At block 702, the processing circuitry 234 determines whether the welding program includes a non-welding movement command prior to the maintenance activity command 508 (e.g., the non-welding movement command 512). If the multi-pass procedure includes the non-welding movement command 512 prior to the maintenance activity command 508 (block 702), at block 704 the processing circuitry 234 determines whether the welding program includes a non-welding movement command after the maintenance activity command 508 (e.g., the non-welding movement command 514).

If the welding program includes both the non-welding movement command 512 before the maintenance activity command 508 and the non-welding movement command 514 after the maintenance activity command 508 (block 704), at block 706 the processing circuitry 234 permits generation and/or execution of the welding program including the maintenance activity command 508.

Conversely, if the welding program is missing the non-welding movement command 512 before the maintenance activity command 508 (block 702) or the non-welding movement command 514 after the maintenance activity command 508 (block 704), at block 708 the processing circuitry 234 generates and outputs a notification indicating that the welding program is missing one or more elements in association with the maintenance activity command 508. In some examples, the processing circuitry 234 may output an indication of the element(s) that are missing from the welding program.

After outputting the notification (block 708) or after permitting generation and/or execution of the welding program (block 706), the example instructions 700 end.

As utilized herein the terms "circuits" and "circuitry" refer to physical electronic components (i.e. hardware) and any software and/or firmware (code) that may configure the hardware, be executed by the hardware, and/or otherwise be associated with the hardware. As used herein, for example, a particular processor and memory may comprise a first "circuit" when executing a first set of one or more lines of code and may comprise a second "circuit" when executing a second set of one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by an operator-configurable setting, factory trim, etc.).

The present devices and/or methods may be realized in hardware, software, or a combination of hardware and software. The present methods and/or systems may be realized in a centralized fashion in at least one computing system, processors, control circuitry, and/or other logic circuits, or in a distributed fashion where different elements are spread across several interconnected computing systems, processors, and/or other logic circuits. Any kind of computing system or other apparatus adapted for carrying out the methods described herein is suited. A typical combination of hardware and software may be a processing system integrated into a welding power source with a program or other code that, when being loaded and executed, controls the welding power source such that it carries out the methods described herein. Another typical implementation may comprise an application specific integrated circuit or chip such as field programmable gate arrays (FPGAs), a programmable logic device (PLD) or complex programmable logic device (CPLD), and/or a system-on-a-chip (SoC). Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine readable medium" is defined to include all types of machine readable storage media and to exclude propagating signals.

An example control circuit implementation may be a microcontroller, a field programmable logic circuit and/or any other control or logic circuit capable of executing instructions that executes weld control software. The control circuit could also be implemented in analog circuits and/or a combination of digital and analog circuitry.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. A robotic welding system, comprising:
   a robotic manipulator configured to position a welding torch;
   a welding power supply configured to output welding power to the welding torch;
   a user interface configured to receive inputs defining a robotic welding program having a maintenance activity and at least one weld involving a weld starting command and a weld ending command, the inputs including position information for at least one of the robotic manipulator or the welding torch for the at least one weld; and
   control circuitry configured to:
      prevent programming or execution of at least one of the maintenance activity or a multi-pass weld involving the at least one weld while the maintenance activity or the at least one weld does not include a first non-welding movement command before the maintenance activity or the weld starting command of the at least one weld or does not include a second non-welding movement command following the maintenance activity or the weld ending command of the at least one weld;
      permit programming or execution of the multi-pass weld involving the maintenance activity or the at least one weld when the maintenance activity or the at least one weld includes the first non-welding movement command and the second non-welding movement command; and
      control the robotic manipulator and the welding power supply based on the maintenance activity or the multi-pass weld.
Clause 2. The robotic welding system as defined in clause 1, wherein the control circuitry is configured to identify the multi-pass weld of the robotic welding program comprising two or more iterations of the at least one weld.
Clause 3. The robotic welding system as defined in clause 2, wherein the control circuitry is configured to identify the multi-pass weld of the robotic welding program based on an input via the user interface.
Clause 4. The robotic welding system as defined in clause 2, wherein the multi-pass weld is defined by indicating the weld starting command, the weld ending command, and a number of passes via the user interface.
Clause 5. The robotic welding system as defined in clause 4, wherein the control circuitry is configured to determine whether the multi-pass weld includes both of the first non-welding movement prior to the weld starting command and the second non-welding movement following the weld ending command.
Clause 6. The robotic welding system as defined in clause 2, wherein the two or more iterations are defined by a same starting location and a same ending location along the weld seam.
Clause 7. The robotic welding system as defined in clause 6, wherein the control circuitry is configured to modify at least one of the starting location or the ending location for at least one of the two or more iterations.
Clause 8. The robotic welding system as defined in clause 7, wherein the control circuitry is configured to modify the at least one of the starting location or the ending location for the at least one of the two or more welding passes in a direction perpendicular to the direction of the weld seam being welded via the two or more iterations.
Clause 9. The robotic welding system as defined in clause 1, wherein the control circuitry is configured to determine whether the first non-welding movement command is present or the second non-welding movement command is present in response to a command to generate the robotic welding program involving the multi-pass weld involving the one or more welds.
Clause 10. The robotic welding system as defined in clause 1, wherein the operator interface is configured to receive an input to modify the two or more iterations of the at least one weld, and the control circuitry is configured to determine whether the first non-welding movement command or the second non-welding movement command is present in response to modification of the two or more iterations of the at least one weld.
Clause 11. The robotic welding system as defined in clause 1, wherein the operator interface is configured to prevent a user command to generate the robotic welding program involving the multi-pass weld involving the one or more welds while the first non-welding movement command or the second non-welding movement command is not present.
Clause 12. The robotic welding system as defined in clause 1, wherein the control circuitry is configured to determine whether the two or more welding passes include the weld starting command and the weld ending command.
Clause 13. The robotic welding system as defined in clause 1, wherein the maintenance activity comprises at least one of a delay for a defined time period, a delay for an operator input, a welding wire cutting procedure, or a nozzle reaming procedure.
Clause 14. A robotic welding interface, comprising:
   a user interface configured to receive inputs defining a robotic welding program having a maintenance activity and at least one weld involving a weld starting command and a weld ending command, the inputs including position information for at least one of the robotic manipulator or the welding torch for the at least one weld; and
   control circuitry configured to:
      prevent programming or execution of at least one of the maintenance activity or a multi-pass weld involving the at least one weld while the maintenance activity or the at least one weld does not include a first non-welding movement command before the maintenance activity or the weld starting command of the at least one weld or does not include a second non-welding movement command following the maintenance activity or the weld ending command of the at least one weld; and
      permit programming or execution of the multi-pass weld involving the maintenance activity or the at least one weld when the maintenance activity or the at least one weld includes the first non-welding movement command and the second non-welding movement command.
Clause 15. The robotic welding interface as defined in clause 14, wherein the control circuitry is configured to identify the multi-pass weld of the robotic welding program comprising two or more iterations of the at least one weld.
Clause 16. The robotic welding interface as defined in clause 15, wherein the control circuitry is configured to identify the multi-pass weld of the robotic welding program based on an input via the user interface.
Clause 17. The robotic welding interface as defined in clause 15, wherein the multi-pass weld is defined by indicating the weld starting command, the weld ending command, and a number of passes via the user interface.
Clause 18. The robotic welding interface as defined in clause 14, wherein the maintenance activity comprises at least one of a delay for a defined time period, a delay for an operator input, a welding wire cutting procedure, or a nozzle reaming procedure.
Clause 19. The robotic welding system as defined in clause 18, wherein the control circuitry is configured to modify at least one of the starting location or the ending location for at least one of the two or more iterations.
Clause 20. The robotic welding system as defined in clause 19, wherein the control circuitry is configured to modify the at least one of the starting location or the ending location for the at least one of the two or more welding passes in a direction perpendicular to the direction of the weld seam being welded via the two or more iterations.

## Claims

1. A robotic welding system, comprising:
a robotic manipulator configured to position a welding torch;
a welding power supply configured to output welding power to the welding torch;
a user interface configured to receive inputs defining a robotic welding program having a maintenance activity and at least one weld involving a weld starting command and a weld ending command, the inputs including position information for at least one of the robotic manipulator or the welding torch for the at least one weld; and
control circuitry configured to:
prevent programming or execution of at least one of the maintenance activity or a multi-pass weld involving the at least one weld while the maintenance activity or the at least one weld does not include a first non-welding movement command before the maintenance activity or the weld starting command of the at least one weld or does not include a second non-welding movement command following the maintenance activity or the weld ending command of the at least one weld;
permit programming or execution of the multi-pass weld involving the maintenance activity or the at least one weld when the maintenance activity or the at least one weld includes the first non-welding movement command and the second non-welding movement command; and
control the robotic manipulator and the welding power supply based on the maintenance activity or the multi-pass weld.

2. The robotic welding system as defined in claim 1, wherein the control circuitry is configured to identify the multi-pass weld of the robotic welding program comprising two or more iterations of the at least one weld, and optionally,
wherein the control circuitry is configured to identify the multi-pass weld of the robotic welding program based on an input via the user interface.

3. The robotic welding system as defined in claim 2, wherein the multi-pass weld is defined by indicating the weld starting command, the weld ending command, and a number of passes via the user interface, and optionally,
wherein the control circuitry is configured to determine whether the multi-pass weld includes both of the first non-welding movement prior to the weld starting command and the second non-welding movement following the weld ending command.

4. The robotic welding system as defined in claim 2, wherein the two or more iterations are defined by a same starting location and a same ending location along the weld seam.

5. The robotic welding system as defined in claim 4, wherein the control circuitry is configured to modify at least one of the starting location or the ending location for at least one of the two or more iterations, and optionally,
wherein the control circuitry is configured to modify the at least one of the starting location or the ending location for the at least one of the two or more welding passes in a direction perpendicular to the direction of the weld seam being welded via the two or more iterations.

6. The robotic welding system as defined in claim 1, wherein the control circuitry is configured to determine whether the first non-welding movement command is present or the second non-welding movement command is present in response to a command to generate the robotic welding program involving the multi-pass weld involving the one or more welds.

7. The robotic welding system as defined in claim 1, wherein the operator interface is configured to receive an input to modify the two or more iterations of the at least one weld, and the control circuitry is configured to determine whether the first non-welding movement command or the second non-welding movement command is present in response to modification of the two or more iterations of the at least one weld.

8. The robotic welding system as defined in claim 1, wherein the operator interface is configured to prevent a user command to generate the robotic welding program involving the multi-pass weld involving the one or more welds while the first non-welding movement command or the second non-welding movement command is not present.

9. The robotic welding system as defined in claim 1, wherein the control circuitry is configured to determine whether the two or more welding passes include the weld starting command and the weld ending command, or
wherein the maintenance activity comprises at least one of a delay for a defined time period, a delay for an operator input, a welding wire cutting procedure, or a nozzle reaming procedure.

10. A robotic welding interface, comprising:
a user interface configured to receive inputs defining a robotic welding program having a maintenance activity and at least one weld involving a weld starting command and a weld ending command, the inputs including position information for at least one of the robotic manipulator or the welding torch for the at least one weld; and
control circuitry configured to:
prevent programming or execution of at least one of the maintenance activity or a multi-pass weld involving the at least one weld while the maintenance activity or the at least one weld does not include a first non-welding movement command before the maintenance activity or the weld starting command of the at least one weld or does not include a second non-welding movement command following the maintenance activity or the weld ending command of the at least one weld; and
permit programming or execution of the multi-pass weld involving the maintenance activity or the at least one weld when the maintenance activity or the at least one weld includes the first non-welding movement command and the second non-welding movement command.

11. The robotic welding interface as defined in claim 10, wherein the control circuitry is configured to identify the multi-pass weld of the robotic welding program comprising two or more iterations of the at least one weld.

12. The robotic welding interface as defined in claim 11, wherein the control circuitry is configured to identify the multi-pass weld of the robotic welding program based on an input via the user interface.

13. The robotic welding interface as defined in claim 11, wherein the multi-pass weld is defined by indicating the weld starting command, the weld ending command, and a number of passes via the user interface.

14. The robotic welding interface as defined in claim 10, wherein the maintenance activity comprises at least one of a delay for a defined time period, a delay for an operator input, a welding wire cutting procedure, or a nozzle reaming procedure.

15. The robotic welding system as defined in claim 14, wherein the control circuitry is configured to modify at least one of the starting location or the ending location for at least one of the two or more iterations, and optionally,
wherein the control circuitry is configured to modify the at least one of the starting location or the ending location for the at least one of the two or more welding passes in a direction perpendicular to the direction of the weld seam being welded via the two or more iterations.
